# DEMANDE DE BREVET EUROPEEN

(11) **EP 3 069 774 A1**
(43) Date de publication de la demande: **21.09.2016**
(21) Numéro de dépôt: 16160777.5
(22) Date de dépôt: 16.03.2016
(51) Int. Cl.: B01D 46/00

(54) **DEPOUSSIEREUR A CARTOUCHES FILTRANTES**

(30) Priorité: 16.03.2015 FR 1552096
(71) Demandeur: AAF France, 27620 Gasny (FR)
(72) Inventeur: VINCENT, Bruno, 27510 Pressagny l'Orgueilleux (FR); BAUDOIN, Olivier, 27110 Daubeuf la Campagne (FR); BEAURIN, Frédéric, 27200 Vernon (FR); LOPES NETO, Romain, 27600 St Aubin sur Gaillon (FR)
(74) Mandataire: Cabinet Chaillot

(57) **Abrégé**

La présente invention a pour objet un dépoussiéreur à cartouche(s) filtrante(s) (1) comprenant une enceinte (2) et une porte d'accès (15) pour chaque cartouche filtrante (11), chaque porte d'accès (15) comprenant une plaque (23) et un élément de serrage (24) relié à la plaque (23), caractérisé par le fait que chaque porte d'accès (15) est reliée à l'enceinte (2) par l'intermédiaire d'un bras support (16) relié à une double charnière fixée sur la face externe de l'enceinte (2), la porte d'accès (15) pouvant coulisser par rapport au bras support (16) selon un jeu de coulissement lorsque l'élément de serrage (24) est desserré.

## Description

La présente invention concerne le domaine des dépoussiéreurs industriels, et porte en particulier sur un dépoussiéreur à cartouche(s) filtrante(s).

Les dépoussiéreurs industriels sont utilisés afin de filtrer l'air contenant des poussières sèches en suspension dans une zone de pollution. L'air y est filtré par l'intermédiaire de cartouches filtrantes disposées dans les dépoussiéreurs, les cartouches filtrantes permettant d'obtenir un air pur filtré par séparation des poussières sèches de l'air, les poussières étant récupérées dans des trémies de récupération puis reconditionnées ou détruites selon les applications.

Les dépoussiéreurs industriels traditionnels comportent généralement des couvercles d'accès aux cartouches filtrantes pour une maintenance des cartouches filtrantes et/ou un remplacement de celles-ci, ces couvercles d'accès étant étanches lorsqu'ils sont positionnés sur les dépoussiéreurs. Cependant ces couvercles d'accès ne sont pas reliés au dépoussiéreur lorsqu'ils sont ouverts, lesdits couvercles devant être posés à un endroit quelconque lorsqu'ils sont retirés du dépoussiéreur, ce qui augmente le temps de maintenance et/ou de remplacement des cartouches filtrantes par un personnel de maintenance, diminuant ainsi l'efficacité de maintenance et/ou de remplacement des cartouches filtrantes. En outre, leur positionnement sur le dépoussiéreur est malcommode et leur poids est souvent important.

La demande de brevet européen EP1313542 décrit un dépoussiéreur à structure de filtre, la structure de filtre comprenant un filtre supporté par une chape dont l'une des extrémités comporte un élément de maintien, la structure de filtre comprenant en outre un couvercle configuré pour s'engager de manière libérable avec l'élément de maintien de la chape par l'intermédiaire d'un élément de serrage. Cependant, le couvercle de la structure de filtre n'est pas relié au dépoussiéreur lorsque le couvercle est désengagé de l'élément de maintien de la chape de la structure de filtre, ledit couvercle devant être posé à un endroit quelconque lorsqu'il est retiré du dépoussiéreur, ce qui augmente le temps de maintenance et/ou de remplacement de la structure de filtre par un personnel de maintenance, diminuant ainsi l'efficacité de maintenance et/ou de remplacement de la structure de filtre.

La demande de brevet européen EP0398091 décrit un filtre à air avec des éléments de filtre horizontaux, des portes étant disposées en face des éléments de filtre pour un accès à ceux-ci, chaque porte étant reliée à la paroi externe du filtre à air par une charnière. Cependant, les portes ne sont pas engagées avec les supports des éléments de filtre lorsqu'elles sont fermées, ce qui pose un problème de maintien en position des extrémités des éléments de filtre en regard des portes, et diminue également l'efficacité d'étanchéité des portes lorsqu'elles sont fermées.

Certains dépoussiéreurs industriels, dits autonettoyants, comprennent en outre des buses de décolmatage par air comprimé à contre-courant permettant de nettoyer les cartouches filtrantes par injection dans celles-ci d'un flux d'air comprimé à contre-courant. Cependant, le nettoyage des cartouches filtrantes n'est pas uniforme car le flux d'air sous pression sortant d'une buse de décolmatage forme généralement un volume d'air conique avec un angle aigu prononcé, les parties des cartouches filtrantes éloignées des buses de décolmatage étant correctement nettoyées alors que les parties des cartouches filtrantes à proximité des buses de décolmatage n'étant pas correctement nettoyées, ce qui conduit à une accumulation de poussières sur les parties des cartouches filtrantes à proximité des buses de décolmatage, diminuant ainsi les performances du dépoussiéreur, et obligeant le personnel de maintenance à remplacer plus souvent les cartouches filtrantes.

La présente invention vise à résoudre les inconvénients de l'état antérieur de la technique, en proposant un dépoussiéreur à cartouche(s) filtrante(s) avec une porte d'accès pour chaque cartouche filtrante, chaque porte d'accès étant reliée à l'enceinte du dépoussiéreur par l'intermédiaire d'un bras support articulé sur l'enceinte par une double charnière et étant configurée pour s'engager de manière libérable avec le support de la cartouche filtrante correspondante par l'intermédiaire d'un élément de serrage, chaque porte d'accès pouvant en outre coulisser par rapport au bras support selon un jeu de coulissement lorsque l'élément de serrage est desserré afin de désengager la porte d'accès du support de cartouche filtrante, chaque support de cartouche filtrante pouvant facultativement comprendre un ou plusieurs déflecteurs afin d'améliorer le décolmatage de la cartouche filtrante.

La présente invention a donc pour objet un dépoussiéreur à cartouche(s) filtrante(s), comprenant :
- une enceinte comportant une entrée d'air, une sortie d'air et une paroi de séparation interne séparant l'enceinte en une chambre de filtrage et une chambre d'air filtré, l'entrée d'air s'ouvrant sur la chambre de filtrage, la chambre d'air filtré débouchant sur l'extérieur par la sortie d'air, une ou plusieurs ouvertures de flux d'air étant formées dans la paroi de séparation pour réaliser une communication fluidique entre la chambre de filtrage et la chambre d'air filtré ;
- une ou plusieurs cartouches filtrantes positionnées dans la chambre de filtrage, chacune en communication fluidique avec une ouverture de flux d'air respective dans la paroi de séparation, chaque cartouche filtrante comprenant :
   o un support ayant une première extrémité reliée à la paroi de séparation et une seconde extrémité opposée à la première extrémité et portant un élément de blocage ;
   o un filtre creux, ouvert à ses deux extrémités, et s'emmanchant sur le support, une première extrémité du filtre étant positionnée de manière étanche contre l'ouverture de flux d'air correspondante dans la paroi de séparation de telle sorte qu'il existe une communication fluidique entre l'intérieur du filtre et l'ouverture de flux d'air correspondante dans la paroi de séparation ;
- une ou plusieurs trémies de récupération de poussières formées dans le fond de la chambre de filtrage pour récupérer les poussières issues du filtrage de la ou des cartouches filtrantes ; et
- une porte d'accès pour chaque cartouche filtrante, chaque porte d'accès s'ouvrant sur la seconde extrémité du filtre correspondant, chaque porte d'accès comprenant :
   o une plaque pour recouvrir l'ouverture dans la seconde extrémité du filtre correspondant lorsque la porte d'accès est fermée ;
   o un élément de serrage relié à la plaque ; et
   o un élément d'engagement relié de manière opérationnelle à l'élément de serrage et configuré pour s'engager avec l'élément de blocage du support de la cartouche filtrante correspondante, la plaque étant configurée pour sceller de manière étanche l'ouverture dans la seconde extrémité du filtre correspondant lorsque la porte d'accès est fermée par engagement de l'élément d'engagement avec l'élément de blocage et utilisation de l'élément de serrage pour déplacer la plaque vers l'élément de blocage ;
caractérisé par le fait que chaque porte d'accès est reliée à l'enceinte par l'intermédiaire d'un bras support articulé sur la face externe de l'enceinte par une double charnière, la porte d'accès étant configurée pour coulisser dans le plan de la plaque par rapport au bras support selon un jeu de coulissement lorsque l'élément de serrage est desserré, de telle sorte que l'élément d'engagement est apte à être désengagé de l'élément de blocage, lorsque l'élément de serrage est desserré, par coulissement de la porte d'accès par rapport au bras support.

En fonctionnement, une dépression est créée dans le dépoussiéreur à l'aide d'une turbine externe reliée à la sortie d'air du dépoussiéreur ou à l'aide d'un ventilateur intégré au dépoussiéreur, ce qui amène l'air « pollué », c'est-à-dire contenant des particules sèches en suspension, présent à l'emplacement où est installé le dépoussiéreur à être aspiré dans la chambre de filtrage du dépoussiéreur par l'intermédiaire de l'entrée d'air de l'enceinte. L'air pollué traverse ensuite radialement les cartouches filtrantes et est ainsi filtré par la paroi externe des cartouches filtrantes, les filtres séparant les poussières sèches de l'air. L'air filtré pénètre ensuite dans la chambre d'air filtré par l'intermédiaire des ouvertures de flux d'air dans la paroi de séparation puis sort du dépoussiéreur par l'intermédiaire de la sortie d'air de l'enceinte, les poussières sèches tombant par gravité dans les trémies de récupération disposées sous la chambre de filtrage ou se fixant à la paroi externe des filtres des cartouches filtrantes.

Les portes d'accès du dépoussiéreur permettent de facilement réaliser une maintenance et/ou un remplacement par un personnel de maintenance des cartouches filtrantes disposées dans la chambre de filtrage de l'enceinte, ces portes d'accès étant configurées pour sceller de manière étanche les secondes extrémités des filtres des cartouches filtrantes par engagement de l'élément d'engagement d'une porte d'accès avec l'élément de blocage du support d'une cartouche filtrante puis serrage de l'élément de serrage de la porte d'accès afin de déplacer la porte d'accès vers l'élément de blocage et ainsi de sceller de manière étanche la seconde extrémité du filtre de la cartouche filtrante avec la plaque de la porte d'accès.

Dans la présente description, l'expression « double charnière » désigne une charnière qui comprend des première et seconde charnières parallèles reliées l'une à l'autre par un bras, la première charnière étant fixée à la paroi externe de l'enceinte et la deuxième charnière étant mobile par rapport à la première charnière tout en restant parallèle à la première charnière.

Un exemple de double charnière est une double charnière Modèle 37-19 de la société Emile Maurin.

Le bras support relié à la double charnière permet de relier la porte d'accès à l'enceinte du dépoussiéreur même lorsque la porte d'accès est désengagée du support de cartouche filtrante par desserrage de l'élément de serrage puis coulissement de la porte d'accès dans le plan de la plaque par rapport au bras support selon le jeu de coulissement, la double charnière permettant à la fois d'éloigner/approcher par translation la porte d'accès de la paroi externe de l'enceinte lors du desserrage/serrage de l'élément de serrage et également d'ouvrir par rotation la porte d'accès.

Ainsi, le temps de maintenance et/ou de remplacement des cartouches filtrantes par un personnel de maintenance est diminué, ce qui permet d'améliorer l'efficacité de maintenance et/ou de remplacement des cartouches filtrantes.

Le dépoussiéreur selon l'invention peut être rattaché à un dispositif monté en aval pour lequel il filtre l'air ou être monté sur un piétement et relié au dispositif monté en aval pour lequel il filtre l'air par une conduite d'air étanche.

Selon une caractéristique particulière de l'invention, chaque bras support comporte un trou disposé en face de l'élément de blocage du support de la cartouche filtrante correspondante, une entretoise reliée à l'élément de serrage de la porte d'accès correspondante étant disposée à l'intérieur dudit trou, le jeu de coulissement de la porte d'accès par rapport au bras support étant créé par un espacement entre l'entretoise et le bord du trou.

Ainsi, l'espacement entre l'entretoise et le bord du trou permet de créer un jeu de coulissement de la porte d'accès par rapport au bras support, ledit jeu de coulissement permettant de désengager l'élément d'engagement de l'élément de blocage, lorsque l'élément de serrage est desserré, par coulissement de la porte d'accès par un opérateur.

Il est à noter qu'une rondelle de glissement parallèle à la plaque de la porte d'accès et fixée à l'élément de serrage pourrait être disposée contre le bras support, le bras support étant disposé entre la plaque et la rondelle de glissement, afin de guider le coulissement de la porte d'accès dans le plan de la plaque, sans s'écarter du cadre de la présente invention.

Selon une caractéristique particulière de l'invention, deux doubles charnières reliées respectivement à deux bras supports de deux portes d'accès adjacentes ont leur charnière fixée sur l'enceinte en commun pour former une triple charnière unique.

Ainsi, une seule triple charnière est nécessaire pour deux portes d'accès adjacentes, ce qui permet de diminuer les coûts de fabrication du dépoussiéreur.

La charnière centrale commune aux deux portes adjacentes permet d'ouvrir les portes par rotation, et les deux autres charnières de la triple charnière permettent respectivement d'éloigner/approcher les deux portes de la paroi de l'enceinte par translation.

Selon une caractéristique particulière de l'invention, un joint d'étanchéité est disposé au niveau du bord et/ou de la périphérie de chaque plaque.

Ainsi, le joint d'étanchéité permet d'améliorer l'étanchéité de la porte d'accès lorsque celle-ci est fermée, le joint d'étanchéité venant de préférence s'appliquer contre la paroi externe de l'enceinte.

Selon une caractéristique particulière de l'invention, l'élément de serrage est un dispositif de serrage à poussoir.

Ainsi, le serrage de la poignée du dispositif de serrage à poussoir par un opérateur permet de rentrer le poussoir du dispositif et donc, lorsque l'élément d'engagement est engagé avec l'élément de blocage, de rapprocher la plaque de la porte d'accès du support de la cartouche filtrante.

De plus, le desserrage de la poignée du dispositif de serrage à poussoir par un opérateur permet de sortir le poussoir du dispositif et donc, lorsque l'élément d'engagement est engagé avec l'élément de blocage, d'éloigner la plaque de la porte d'accès du support de la cartouche filtrante.

Une référence de dispositif de serrage à poussoir est par exemple une sauterelle à tige de poussée Référence GG.AG411 de la société Elesa.

Selon une caractéristique particulière de l'invention, l'élément de blocage est une rondelle ouverte en forme de C, l'ouverture de la rondelle étant tournée vers le haut, configurée pour coopérer avec un élément d'engagement sous forme de vis dont la tige est apte à entrer dans la rondelle ouverte et dont la tête est apte à prendre appui sur la rondelle.

Ainsi, l'ouverture de la rondelle ouverte permet de recevoir de manière libérable la vis de l'élément d'engagement d'une porte d'accès.

La tête de vis peut facilement s'engager de manière libérable dans la rondelle ouverte de l'élément de blocage, le diamètre de la tige de la vis étant légèrement inférieur à l'écartement de l'ouverture de la rondelle ouverte, le diamètre de la tête de vis étant supérieur à l'écartement de l'ouverture de la rondelle ouverte afin que la tête soit apte à prendre appui sur la rondelle lorsque la tige est entrée dans la rondelle ouverte.

Selon une caractéristique particulière de l'invention, un écrou de réglage est disposé sur la vis pour ajuster la distance entre la tête de vis et la plaque d'une porte d'accès.

Ainsi, les éléments d'engagement des portes d'accès peuvent être ajustés en fonction du type de cartouches filtrantes utilisé.

En outre, un ajustement précis peut également être réalisé pour chaque porte d'accès en fonction des tolérances de la cartouche filtrante correspondante.

Selon une caractéristique particulière de l'invention, chaque support comporte trois tiges coudées équidistantes, les parties coudées des trois tiges étant reliées à l'élément de blocage et les autres parties des trois tiges étant configurées pour s'encastrer dans des trous disposés dans la paroi de séparation de l'enceinte.

Les parties non coudées des trois tiges peuvent être parallèles et former les trois sommets d'un triangle équilatéral en coupe transversale.

Les trois tiges sont de préférence métalliques, mais pourraient également être dans une matière plastique sans s'éloigner du cadre de la présente invention.

Chaque support pourrait également comprendre un ou plusieurs cadres de support creux en forme de triangle, les trois sommets du triangle de chaque cadre de support étant respectivement soudés aux trois tiges, sans s'écarter du cadre de la présente invention.

Selon une caractéristique particulière de l'invention, chaque filtre comprend plusieurs éléments de filtre successivement disposés sur le support de la cartouche filtrante correspondante, chaque liaison entre deux éléments de filtre étant étanche.

Les éléments de filtre peuvent être en matière textile ou en papier, les éléments de filtre comprenant des trous microscopiques afin de laisser passer l'air à travers ceux-ci mais pas les poussières.

Chaque élément de filtre possède, de préférence, une section transversale circulaire creuse afin de s'insérer sur le support de cartouche filtrante.

Selon une caractéristique particulière de l'invention, le dépoussiéreur à cartouche(s) filtrante(s) comprend en outre une ou plusieurs buses de décolmatage par air comprimé à contre-courant disposées dans la chambre d'air filtré respectivement tournées vers la ou les ouvertures de flux d'air dans la paroi de séparation.

La pénétration de l'air dans les cartouches filtrantes provoque un dépôt de poussières en périphérie des cartouches. Or, l'encrassement des cartouches entraîne une perte de charge qui conduit à une différence de pression élevée entre le volume d'air sale et le volume d'air propre.

Les buses de décolmatage permettent de nettoyer les filtres des cartouches filtrantes par projection d'air comprimé à contre-courant dans les cartouches filtrantes, ce qui permet un décollement des poussières déposées sur les faces externes des filtres, les poussières tombant ensuite par gravité dans les trémies de récupération.

Ainsi, la valeur de différence de pression s'en retrouve diminuée, ce qui permet de revenir à un fonctionnement normal du dépoussiéreur.

Selon une caractéristique particulière de l'invention, chaque support de cartouche filtrante comporte un ou plusieurs déflecteurs creux, chaque déflecteur creux étant configuré pour dévier vers la paroi interne du filtre une partie du flux d'air comprimé fourni par la buse correspondante, l'autre partie du flux d'air comprimé passant à travers le déflecteur.

Le ou les déflecteurs sont, de préférence, disposés au niveau de la partie du support à proximité de la buse de décolmatage, c'est-à-dire à l'endroit où les filtres ne sont pas correctement nettoyés dans l'état antérieur de la technique. Le ou les déflecteurs sont, de préférence, dans un plan perpendiculaire au plan longitudinal de la cartouche filtrante, pour dévier le flux d'air issu de la buse de décolmatage qui se propage dans la direction longitudinale de la cartouche filtrante, dans le sens opposé au flux normal d'air dans les cartouches filtrantes, de l'entrée vers la sortie d'air du dépoussiéreur.

Ainsi, le nettoyage d'une cartouche filtrante est uniforme sur toute sa longueur, ce qui permet d'augmenter les performances du dépoussiéreur et de diminuer la fréquence de remplacement des cartouches filtrantes.

Pour chaque déflecteur, la face de déflecteur tournée vers la buse de décolmatage comporte des parties angulaires afin de dévier une partie du flux d'air comprimé vers la paroi interne du filtre de la cartouche filtrante, l'autre partie du flux d'air comprimé passant à travers le creux du déflecteur.

Le ou les déflecteurs sont de préférence métalliques.

Chaque déflecteur peut avoir une forme triangulaire, circulaire ou carrée, le déflecteur étant soudé aux trois tiges du support de cartouche filtrante.

Selon une caractéristique particulière de l'invention, chaque déflecteur comporte sur tout ou partie de sa surface des perforations.

Les perforations, de préférence millimétriques, sont suffisamment petites pour que le déflecteur assure la fonction de décolmatage et permettent de limiter l'augmentation de vitesse de l'air dans la cartouche filtrante et ainsi d'éviter une perte en pression.

Selon une caractéristique particulière de l'invention, le dépoussiéreur à cartouche(s) filtrante(s) comprend en outre un ventilateur pour créer un flux d'air entre l'entrée d'air et la sortie d'air de l'enceinte.

Ainsi, le ventilateur permet de créer une dépression dans le dépoussiéreur, ce qui amène l'air « pollué », c'est-à-dire contenant des particules sèches en suspension, présent à l'emplacement où est installé le dépoussiéreur à être aspiré dans la chambre de filtrage du dépoussiéreur par l'intermédiaire de l'entrée d'air de l'enceinte.

La présente invention a également pour objet une turbine équipée d'un dépoussiéreur à cartouche(s) filtrante(s) selon la présente invention.

Ainsi, la turbine permet de créer une dépression dans le dépoussiéreur, ce qui amène l'air « pollué », c'est-à-dire contenant des particules sèches en suspension, présent à l'emplacement où est installé le dépoussiéreur à être aspiré dans la chambre de filtrage du dépoussiéreur par l'intermédiaire de l'entrée d'air de l'enceinte.

Pour mieux illustrer l'objet de la présente invention, on va en décrire ci-après, à titre illustratif et non limitatif, un mode de réalisation préféré, avec référence aux dessins annexés.

Sur ces dessins :
- la Figure 1 est une vue en perspective d'un dépoussiéreur selon la présente invention ;
- la Figure 2 est une vue éclatée d'un support de cartouche filtrante et d'une porte d'accès du dépoussiéreur de la Figure 1 ;
- la Figure 3a est une vue en coupe de la porte d'accès fermée du dépoussiéreur de la Figure 1 dont l'élément de serrage est serré ;
- la Figure 3b est une vue en coupe de la porte d'accès de la Figure 3a fermée dont l'élément de serrage est desserré ;
- la Figure 3c est une vue en coupe de la porte d'accès de la Figure 3a dont l'élément de serrage est desserré et dont l'élément d'engagement est désengagé ;
- la Figure 4 est une vue en perspective du dépoussiéreur de la Figure 1 dont une porte d'accès est ouverte ; et
- la Figure 5 est une vue en coupe d'une cartouche filtrante du dépoussiéreur de la Figure 1 disposée devant une buse de décolmatage du dépoussiéreur.

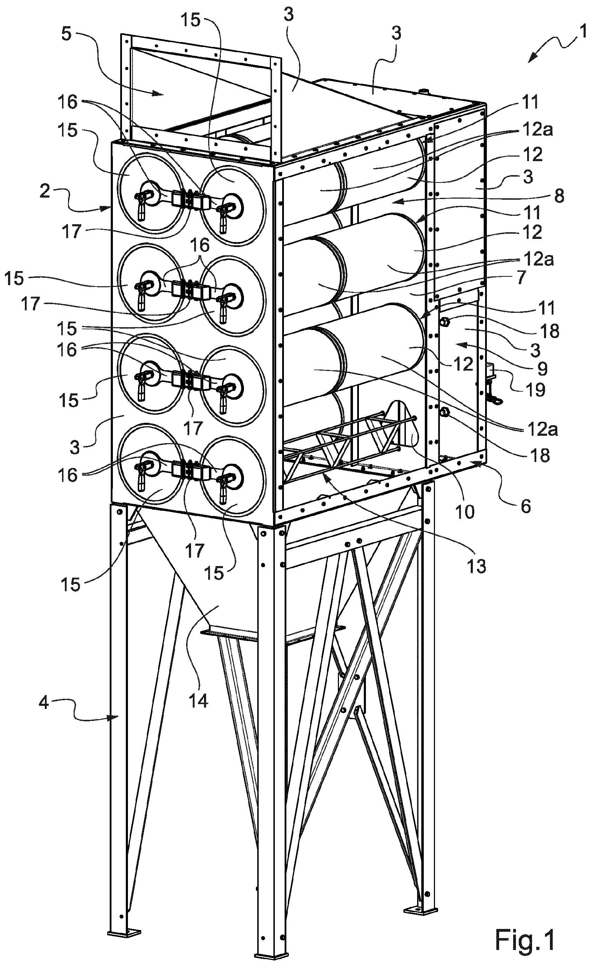

Si l'on se réfère à la Figure 1, on peut voir qu'il y est représenté un dépoussiéreur 1 à cartouches filtrantes selon la présente invention.

Il est à noter que certaines des parois latérales du dépoussiéreur 1 n'ont pas été représentées afin de faciliter la compréhension du dessin.

Le dépoussiéreur 1 à cartouches filtrantes comprend une enceinte 2 formée de parois métalliques 3 latérales et supérieures.

L'enceinte 2 est disposée sur une charpente de support 4.

L'enceinte 2 comporte une entrée d'air 5 au niveau sa partie supérieure, une sortie d'air 6 au niveau de sa partie inférieure et une paroi de séparation interne 7 séparant l'enceinte 2 en une chambre de filtrage 8 et une chambre d'air filtré 9 contiguës.

L'entrée d'air 5 s'ouvre sur la chambre de filtrage 8, la chambre d'air filtré 9 débouche quant à elle sur l'extérieur par la sortie d'air 6, et la paroi de séparation 7 possède des ouvertures de flux d'air 10 permettant une communication fluidique entre la chambre de filtrage 8 et la chambre d'air filtré 9.

Le dépoussiéreur 1 comprend en outre des cartouches filtrantes 11 positionnées de manière horizontale dans la chambre de filtrage 8, perpendiculaires à la paroi de séparation 7, chacune en communication fluidique avec une ouverture de flux d'air 10 respective dans la paroi de séparation 7.

Dans ce mode de réalisation non limitatif, le dépoussiéreur 1 comprend deux colonnes adjacentes de quatre cartouches filtrantes 11.

Il est à noter que le dépoussiéreur 1 pourrait comprendre une nombre quelconque de cartouches filtrantes 11 disposées selon un nombre quelconque de colonnes et de lignes, et dans une disposition quelconque, sans s'écarter du cadre de la présente invention.

Chaque cartouche filtrante 11 comprend un filtre 12 emmanché sur un support 13, chaque filtre 12 étant constitué de deux éléments de filtre 12a successivement disposés sur le support 13 correspondant, chaque élément de filtre 12a étant cylindrique et creux et possédant une coupe transversale de forme circulaire, chaque liaison entre deux éléments de filtre 12a adjacents étant étanche.

Les éléments de filtre 12a sont en papier ou en matière textile et comprennent des trous microscopiques afin de laisser passer de l'air radialement à travers ceux-ci mais pas les poussières.

Il est à noter que chaque filtre 12 pourrait être constitué d'un seul élément de filtre 12a ou d'au moins trois éléments de filtre 12a, sans s'écarter du cadre de la présente invention.

Les éléments de filtre 12a de l'une des cartouches filtrantes 11 n'ont pas été représentés afin de représenter le support 13 de la cartouche filtrante 11.

Le support 13 de cartouche filtrante 11 sera décrit plus en détail ci-après.

La première extrémité de chaque filtre 12 est positionnée de manière étanche contre l'ouverture de flux d'air 10 correspondante dans la paroi de séparation 7, de telle sorte qu'il existe une communication fluidique entre l'intérieur du filtre 12 et l'ouverture de flux d'air 10 correspondante dans la paroi de séparation 7. La seconde extrémité de chaque filtre 12 est adjacente à la paroi métallique 3 latérale opposée à la paroi de séparation 7 dans la chambre de filtrage 8.

Le dépoussiéreur 1 comprend également une trémie 14 de récupération de poussières disposée sous les cartouches filtrantes 11, formée dans le fond de la chambre de filtrage 8 qui s'ouvre sur la trémie 14.

Il est à noter que le dépoussiéreur 1 pourrait comprendre plusieurs trémies 14, par exemple une sous chaque colonne de cartouches filtrantes, sans s'écarter du cadre de la présente invention.

Une dépression est créée dans le dépoussiéreur 1 à l'aide d'une turbine externe (non représentée à la Figure 1) reliée à la sortie d'air 6 du dépoussiéreur 1 pour créer un flux d'air entre l'entrée d'air 5 et la sortie d'air 6 de l'enceinte 2, ce qui amène l'air « pollué », c'est-à-dire contenant des particules sèches en suspension, présent à l'emplacement où est installé le dépoussiéreur 1 à être aspiré dans la chambre de filtrage 8 du dépoussiéreur 1 par l'intermédiaire de l'entrée d'air 5 en partie haute de l'enceinte 2. L'air pollué traverse ensuite radialement les filtres 12 des cartouches filtrantes 11 et est ainsi filtré par les filtres 12 des cartouches filtrantes 11, les filtres 12 séparant les poussières sèches de l'air. L'air filtré pénètre ensuite dans la chambre d'air filtré 9 par l'intermédiaire des ouvertures de flux d'air 10 dans la paroi de séparation 7, puis sort du dépoussiéreur 1 par l'intermédiaire de la sortie d'air 6 de l'enceinte 2, les poussières sèches tombant par gravité dans la trémie 14 disposée sous la chambre de filtrage 8 ou se fixant à la paroi externe des filtres 12 des cartouches filtrantes 11.

Il est à noter que la dépression dans le dépoussiéreur 1 pourrait également être créée par un ventilateur intégré au dépoussiéreur 1 pour créer un flux d'air entre l'entrée d'air 5 et la sortie d'air 6 de l'enceinte 2, sans s'écarter du cadre de la présente invention.

Le dépoussiéreur 1 comprend en outre une porte d'accès 15 pour chaque cartouche filtrante 11, chaque porte d'accès 15 s'ouvrant sur la seconde extrémité du filtre 12 correspondant adjacente à la paroi métallique 3 latérale opposée à la paroi de séparation 7 dans la chambre de filtrage 8.

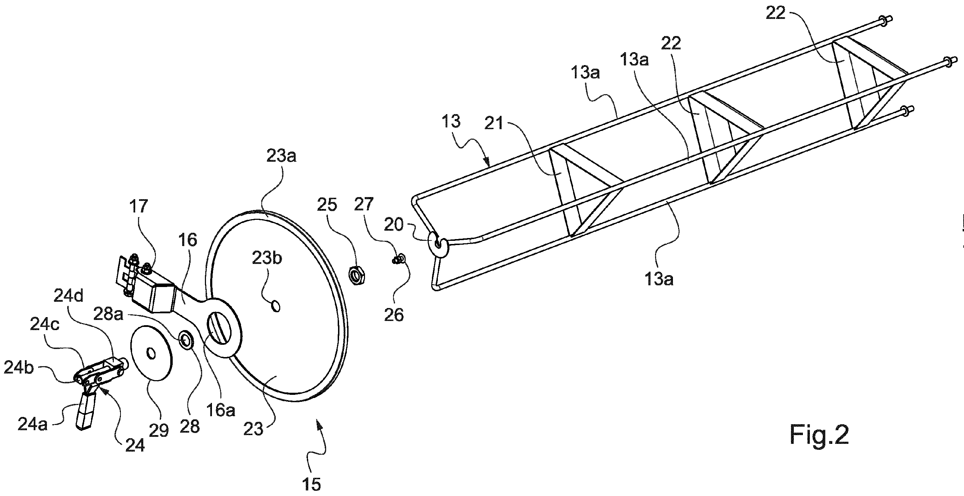

Les portes d'accès 15 seront décrites plus en détail en référence à la Figure 2.

Chaque porte d'accès 15 est reliée à l'enceinte 2 par l'intermédiaire d'un bras support 16 relié à une triple charnière 17 fixée sur la face externe de la paroi métallique 3 latérale adjacente aux secondes extrémités des filtres 12.

Deux bras supports 16 de deux portes d'accès 15 horizontalement adjacentes sont reliés à la même triple charnière 17, ladite triple charnière 17 comprenant une charnière centrale commune aux deux bras supports 16, fixée sur la paroi de l'enceinte 2.

Il est à noter que chaque bras support 16 pourrait également être relié à une double charnière, deux bras supports 16 adjacents étant alors reliés à deux doubles charnières distinctes, sans s'écarter du cadre de la présente invention.

Les portes d'accès 15 permettent de facilement réaliser une maintenance et/ou un remplacement par un personnel de maintenance des cartouches filtrantes 11 disposées dans la chambre de filtrage 8 de l'enceinte 2, ces portes d'accès 15 étant configurées, lorsqu'elles sont fermées, pour sceller de manière étanche les secondes extrémités des filtres 12 des cartouches filtrantes 11.

Le dépoussiéreur 1 comprend en outre des buses de décolmatage 18 par air comprimé à contre-courant disposées dans la chambre d'air filtré 9, respectivement tournées vers les ouvertures de flux d'air 10 dans la paroi de séparation 7, les buses de décolmatage 18 étant alimentées en air comprimé par un réservoir d'air comprimé 19 disposé à l'arrière du dépoussiéreur 1.

Les buses de décolmatage 18 permettent de nettoyer les filtres 12 des cartouches filtrantes 11 par projection d'air comprimé dans les cartouches filtrantes 11, à contre-courant du flux d'air en fonctionnement normal du dépoussiéreur 1, ce qui permet un décollement des poussières déposées sur les parois externes des filtres 12, les poussières tombant ensuite par gravité dans la trémie 14.

Il est à noter qu'un conteneur (non représenté à la Figure 1) pourrait être disposé sous la trémie 14 afin de récupérer les poussières tombant dans la trémie 14.

Si l'on se réfère à la Figure 2, on peut voir qu'il y est représenté un support 13 de cartouche filtrante 11 et une vue éclatée d'une porte d'accès 15 du dépoussiéreur 1.

Le support 13 comporte trois tiges 13a coudées équidistantes métalliques, les parties coudées des trois tiges 13a étant reliées à un élément de blocage 20 et les autres parties des trois tiges 13a étant configurées pour s'encastrer dans des trous disposés dans la paroi de séparation 7 de l'enceinte 2 du dépoussiéreur 1, l'élément de blocage 20 étant une rondelle ouverte en forme de C, l'ouverture du C étant tournée vers le haut et les tiges 13a se fixant sur la rondelle en forme de C, par exemple par soudage.

Il est à noter que le support 13 pourrait également comporter au moins quatre tiges 13a, sans s'écarter du cadre de la présente invention.

Les extrémités des tiges 13a peuvent par exemple s'encastrer à force dans la paroi de séparation 7 ou peuvent être filetées afin d'être boulonnées sur la paroi de séparation 7 depuis la chambre d'air filtré 9.

Le support 13 comporte également un renfort métallique 21 creux en forme de triangle, les trois sommets du renfort 21 étant respectivement soudés aux trois tiges 13a.

Le support 13 comporte en outre deux déflecteurs creux 22, chaque déflecteur creux 22 étant configuré pour dévier vers la paroi interne du filtre 12 correspondant une partie du flux d'air comprimé fourni par la buse de décolmatage 18 correspondante, l'autre partie du flux d'air comprimé passant à travers le déflecteur 22.

Il est à noter que le support 13 ne pourrait comprendre aucun déflecteur 22, ou comprendre un seul déflecteur 22 ou au moins trois déflecteurs 22, sans s'écarter du cadre de la présente invention.

Les déflecteurs 22 sont disposés au niveau de la partie du support 13 à proximité de la buse de décolmatage 18.

Les déflecteurs 22 sont métalliques et possèdent une forme de triangle en coupe transversale, les sommets des déflecteurs 22 étant respectivement soudés aux trois tiges 13a du support 13.

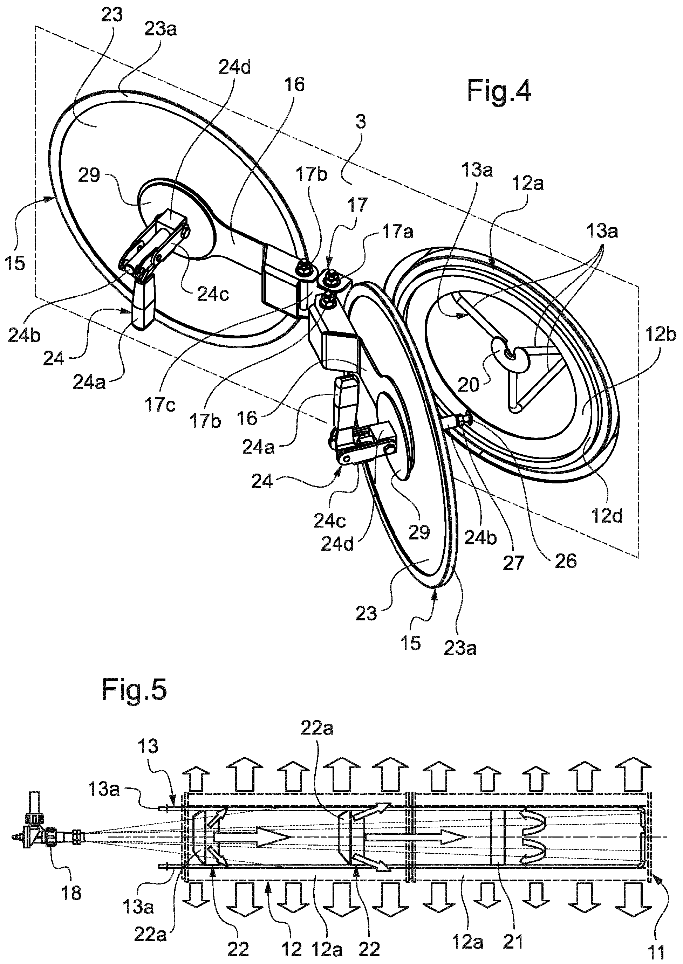

Les déflecteurs 22 seront décrits plus en détail en référence à la Figure 5.

Il est à noter que les déflecteurs 22 pourraient également avoir une forme circulaire ou carrée en coupe transversale, sans s'écarter du cadre de la présente invention, sous réserve d'avoir la fonction de déflexion du flux d'air issue de la buse de décolmatage 18.

La porte d'accès 15 comprend une plaque 23 circulaire configurée pour recouvrir l'ouverture dans la seconde extrémité du filtre 12 correspondant lorsque la porte d'accès 15 est fermée, un joint d'étanchéité 23a étant disposé au niveau du bord de chaque plaque 23.

La porte d'accès 15 comprend également un élément de serrage 24, l'élément de serrage 24 étant un dispositif de serrage à poussoir comprenant une poignée 24a, la poignée 24a étant reliée à une tige 24b et couplée en rotation à un élément de liaison 24c relié à un bloc de support 24d dans lequel est insérée de manière coulissante la tige 24b.

L'une des extrémités du bloc de support 24d passe à travers un trou central 16a dans le bras support 16 et à travers un trou central 23b dans la plaque 23, un écrou de serrage 25 disposé côté support 13 étant vissé sur ladite extrémité du bloc de support 24d afin de fixer l'élément de serrage 24 à la plaque 23.

La porte d'accès 15 comprend en outre un élément d'engagement 26 configuré pour s'engager avec l'élément de blocage 20 du support 13, l'élément d'engagement 26 étant une vis vissée dans l'extrémité de la tige 24b de l'élément de serrage 24 en regard de l'élément de blocage 20.

La tige de la vis 26 est apte à entrer dans la rondelle ouverte 20 et la tête de la vis 26 est apte à prendre appui sur la rondelle 20 lorsque la tige de la vis 26 est entrée dans la rondelle ouverte 20.

Un écrou de réglage 27 est disposé sur la tige de la vis 26 pour ajuster la distance entre la tête de la vis 26 et la plaque 23 de la porte d'accès 15.

Le serrage de la poignée 24a du dispositif de serrage à poussoir 24 par un opérateur permet de rentrer la tige 24b dans le dispositif de serrage à poussoir 24 et donc, lorsque l'élément d'engagement 26 est engagé avec l'élément de blocage 20, de rapprocher la plaque 23 du support 13.

De plus, le desserrage de la poignée 24a du dispositif de serrage à poussoir 24 par un opérateur permet de sortir la tige 24b du dispositif de serrage à poussoir 24 et donc, lorsque l'élément d'engagement 26 est engagé avec l'élément de blocage 20, d'éloigner la plaque 23 du support 13.

Une entretoise 28 avec un trou central 28a dans lequel est inséré le bloc de support 24d de l'élément de serrage 24 est disposée à l'intérieur du trou central 16a du bras support 16, un jeu de coulissement de la porte d'accès 15 par rapport au bras support 16 étant créé par un espacement entre l'entretoise 28 et le bord du trou central 16a du bras support 16.

Une rondelle de glissement 29 parallèle à la plaque 23 est disposée entre l'élément de serrage 24 et le bras support 16 afin de guider le coulissement de la porte d'accès 15 dans le plan de la plaque 23, le bloc de support 24d de l'élément de serrage 24 étant inséré dans la rondelle de glissement 29.

Ainsi, le jeu de coulissement créé permet de d'engager/désengager l'élément d'engagement 26 avec/de l'élément de blocage 20, lorsque l'élément de serrage 24 est desserré, par coulissement de la porte d'accès 15 par un opérateur par rapport au bras support 16.

La plaque 23 est ainsi configurée pour sceller de manière étanche l'ouverture dans la seconde extrémité du filtre 12 correspondant par engagement de l'élément d'engagement 26 avec l'élément de blocage 20 puis utilisation de l'élément de serrage 24 pour déplacer la plaque 23 vers l'élément de blocage 20.

Il est à noter que seules deux charnières de la triple charnière 17 ont été représentées à la Figure 2, lesdites deux charnières représentées étant les deux charnières associées à la porte d'accès 15 représentée.

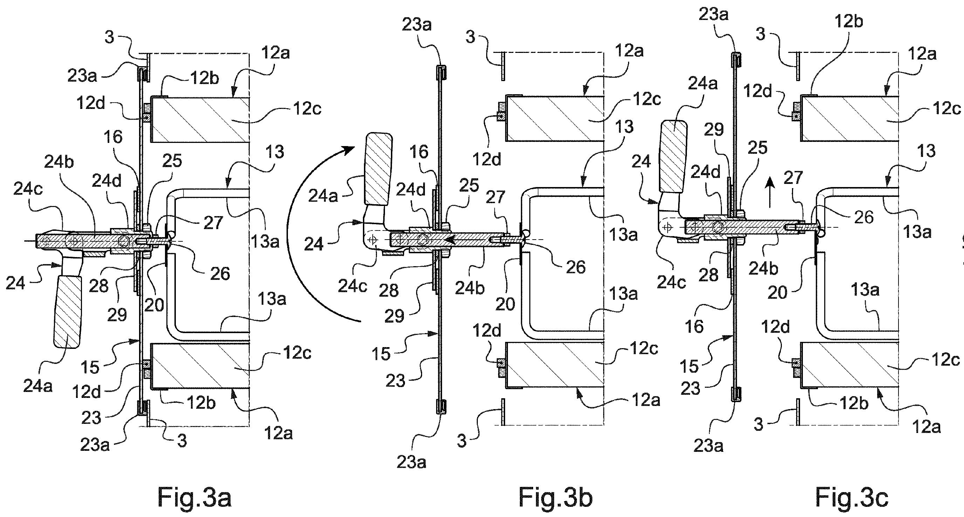

Si l'on se réfère aux Figures 3a, 3b et 3c, on peut voir qu'il y est représenté la cinématique d'ouverture d'une porte d'accès 15 du dépoussiéreur 1.

Chaque élément de filtre 12a possède des rondelles rigides 12b au niveau de ses deux extrémités, les rondelles rigides 12b servant de support de fixation pour l'élément en papier ou tissu 12c de l'élément de filtre 12a.

Un joint d'étanchéité 12d est disposé sur chaque face externe de rondelle rigide 12b d'élément de filtre 12a, de telle sorte qu'une liaison entre deux éléments de filtre 12a est étanche, que la liaison entre un élément de filtre 12a et la paroi de séparation 7 est étanche, et que la liaison entre un élément de filtre 12a et la plaque 23 de la porte d'accès 15, lorsque la porte d'accès 15 est fermée, est étanche.

Si l'on se réfère en particulier à la Figure 3a, on peut voir que la porte d'accès 15 est fermée.

La vis 26 de la porte d'accès 15 est engagée avec la rondelle ouverte 20 du support 13 de cartouche filtrante 11.

La poignée 24a de l'élément de serrage 24 est serrée, c'est-à-dire orientée vers le bas, de telle sorte que la tige 24b est rentrée dans l'élément de serrage 24.

Ainsi l'entretoise 28 est disposée au centre du trou central 16a du bras support 16 et la plaque 23 est rapprochée du support 13, de telle sorte que le bord de la plaque 23 est en contact avec la paroi latérale 3 du dépoussiéreur 1, le joint d'étanchéité 23a étant en appui contre la paroi latérale 3 du dépoussiéreur 1.

De plus, la plaque 23 de la porte d'accès 15 est en contact avec le joint d'étanchéité 12d de l'élément de filtre 12a en regard de la porte d'accès 15, de telle sorte que l'ouverture dans la seconde extrémité du filtre 12 est scellée de manière étanche.

Si l'on se réfère maintenant à la Figure 3b, on peut voir que la poignée 24a de l'élément de serrage 24 est desserrée par un opérateur, c'est-à-dire orientée vers le haut.

Le desserrage de la poignée 24a entraîne la sortie de la tige 24b de l'élément de serrage 24.

La vis 26 étant toujours engagée avec la rondelle ouverte 20 du support 13, la plaque 23 de la porte d'accès 15 s'éloigne ainsi du support 13 de cartouche filtrante 11 par translation, la plaque 23 restant parallèle à la paroi latérale 3 du dépoussiéreur 1 en raison du fait que la charnière non centrale associée de la triple charnière 17 tourne par rapport à la charnière centrale de la triple charnière 17 et en raison du jeu de coulissement entre la porte d'accès 15 et le bras support 16.

Ainsi, l'ouverture dans la seconde extrémité du filtre 12 est ouverte.

Si l'on se réfère enfin à la Figure 3c, on peut voir que la porte d'accès 15 est soulevée par un opérateur.

Le soulèvement de la porte d'accès 15 entraîne le désengagement de la vis 26 de la rondelle ouverte 20 du support 13.

Ledit soulèvement est possible grâce au jeu de coulissement entre l'entretoise 28 et le bord du trou central 16a du bras support 16, l'entretoise 28 venant buter contre le bord supérieur du trou central 16a du bras support 16 lorsque la porte d'accès 15 est soulevée, permettant ainsi le désengagement de la tête de la vis 26 de la rondelle ouverte 20, le support 13 restant fixé à la paroi de séparation 7 par ses tiges 13a.

Après le désengagement de la vis 26 de la rondelle ouverte 20, la porte d'accès 15 peut ensuite être entièrement ouverte par un opérateur, à l'aide de la rotation de la charnière centrale de la triple charnière 17, ce qui permet de réaliser une maintenance et/ou un remplacement de la cartouche filtrante 11 correspondante par l'opérateur, sans avoir à détacher la porte d'accès 15 de l'enceinte 2.

Si l'on se réfère à la Figure 4, on peut voir qu'il y est représenté deux portes d'accès 15 adjacentes du dépoussiéreur 1, l'une des deux portes d'accès 15 étant ouverte et l'autre des deux portes d'accès 15 étant fermée.

L'entretoise 28 de la porte d'accès 15 ouverte vient buter contre le bord inférieur du trou central 16a du bras support 16 lorsque la porte d'accès 15 ouverte n'est plus maintenue par un opérateur, ainsi le centre de la rondelle de glissement 29 de la porte d'accès 15 ouverte est inférieur au centre du trou 16a du bras support 16.

Les bras supports 16 des deux portes d'accès 15 adjacentes sont reliés à une triple charnière 17 unique.

La triple charnière 17 comprend une charnière centrale commune 17a et deux autres charnières 17b respectivement associées aux deux portes d'accès 15 adjacentes, chaque charnière 17b étant reliée à la charnière centrale 17a par un bras 17c, la charnière centrale 17a étant fixée à la paroi latérale 3 de l'enceinte 2 et les deux autres charnières 17b étant mobiles par rapport à la charnière centrale 17a.

Ainsi, la triple charnière 17 permet à la fois d'éloigner/approcher par translation une ou les deux portes d'accès 15 adjacentes de la paroi latérale 3 de l'enceinte 2 lors du desserrage/serrage de l'élément de serrage 24 correspondant et également d'ouvrir par rotation la ou les portes d'accès 15 adjacentes.

Si l'on se réfère à la Figure 5, on peut voir qu'il y est représenté le flux d'air comprimé injecté par une buse de décolmatage 18 dans une cartouche filtrante 11.

Lorsque la valeur maximale acceptable de la dépression entre le volume d'air sale et le volume d'air propre est atteinte, un séquenceur (non représenté à la Figure 5) envoie un signal à la buse de décolmatage 18 pour le déclenchement du décolmatage.

Il est en résulte une libération d'un volume d'air comprimé par la buse de décolmatage 18, le volume d'air comprimé étant injecté dans la cartouche filtrante 11 à contre-courant du flux d'air traité par la cartouche filtrante 11.

Ceci a pour effet d'augmenter la pression d'air, par une onde de choc, à l'intérieur de la cartouche filtrante 11, la combinaison de cette onde de choc et de la montée en pression engendrant un décollement des poussières dans la chambre de filtrage 8, les poussières ainsi décollées du filtre 12 tombant ensuite par gravité dans la trémie 14 de récupération.

Le rebond du volume d'air comprimé, à l'intérieur de la cartouche filtrante 11, sur la plaque 23 de la porte d'accès 15 permet un décolmatage efficace de la partie du filtre 12 opposée à la buse de décolmatage 18.

Les déflecteurs 22 du support 13 de cartouche filtrante 11 sont disposés au niveau de la partie du support 13 à proximité de la buse de décolmatage 18, c'est-à-dire à l'endroit où le filtre 12 n'est pas correctement nettoyé dans l'état antérieur de la technique.

Pour chaque déflecteur 22, la face du déflecteur 22 tournée vers la buse de décolmatage 18 comporte des parties angulaires 22a configurées pour dévier une partie du flux d'air comprimé vers la paroi interne du filtre 12 de la cartouche filtrante 11, l'autre partie du flux d'air comprimé passant à travers le creux du déflecteur 22.

Ainsi, le nettoyage du filtre 12 de la cartouche filtrante 11 est uniforme sur toute la longueur du filtre 12, ce qui permet d'augmenter les performances du dépoussiéreur 1 et de diminuer la fréquence de remplacement de la cartouche filtrante 11.

Il est à noter que chaque déflecteur 22 pourrait également comporter, sur toute sa surface, des perforations, de préférence millimétriques, afin de limiter l'augmentation de vitesse de l'air dans la cartouche filtrante 11 et ainsi d'éviter une perte en pression, sans s'écarter du cadre de la présente invention.

La présente invention a également pour objet une turbine équipée d'un dépoussiéreur à cartouches filtrantes 1 selon la présente invention.

## Revendications

1. - Dépoussiéreur (1) à cartouche(s) filtrante(s), comprenant :
- une enceinte (2) comportant une entrée d'air (5), une sortie d'air (6) et une paroi de séparation interne (7) séparant l'enceinte (2) en une chambre de filtrage (8) et une chambre d'air filtré (9), l'entrée d'air (5) s'ouvrant sur la chambre de filtrage (8), la chambre d'air filtré (9) débouchant sur l'extérieur par la sortie d'air (6), une ou plusieurs ouvertures de flux d'air (10) étant formées dans la paroi de séparation (7) pour réaliser une communication fluidique entre la chambre de filtrage (8) et la chambre d'air filtré (9) ;
- une ou plusieurs cartouches filtrantes (11) positionnées dans la chambre de filtrage (8), chacune en communication fluidique avec une ouverture de flux d'air (10) respective dans la paroi de séparation (7), chaque cartouche filtrante (11) comprenant :
o un support (13) ayant une première extrémité reliée à la paroi de séparation (7) et une seconde extrémité opposée à la première extrémité et portant un élément de blocage (20) ;
o un filtre (12) creux, ouvert à ses deux extrémités, et s'emmanchant sur le support (13), une première extrémité du filtre (12) étant positionnée de manière étanche contre l'ouverture de flux d'air (10) correspondante dans la paroi de séparation (7) de telle sorte qu'il existe une communication fluidique entre l'intérieur du filtre (12) et l'ouverture de flux d'air (10) correspondante dans la paroi de séparation (7) ;
- une ou plusieurs trémies (14) de récupération de poussières formées dans le fond de la chambre de filtrage (8) pour récupérer les poussières issues du filtrage de la ou des cartouches filtrantes (11) ; et
- une porte d'accès (15) pour chaque cartouche filtrante (11), chaque porte d'accès (15) s'ouvrant sur la seconde extrémité du filtre (12) correspondant, chaque porte d'accès (15) comprenant :
o une plaque (23) pour recouvrir l'ouverture dans la seconde extrémité du filtre (12) correspondant lorsque la porte d'accès (15) est fermée ;
o un élément de serrage (24) relié à la plaque (23) ; et
o un élément d'engagement (26) relié de manière opérationnelle à l'élément de serrage (24) et configuré pour s'engager avec l'élément de blocage (20) du support (13) de la cartouche filtrante (11) correspondante, la plaque (23) étant configurée pour sceller de manière étanche l'ouverture dans la seconde extrémité du filtre (12) correspondant lorsque la porte d'accès (15) est fermée par engagement de l'élément d'engagement (26) avec l'élément de blocage (20) et utilisation de l'élément de serrage (24) pour déplacer la plaque (23) vers l'élément de blocage (20) ;
**caractérisé par le fait que** chaque porte d'accès (15) est reliée à l'enceinte (2) par l'intermédiaire d'un bras support (16) articulé sur la face externe de l'enceinte (2) par une double charnière, la porte d'accès (15) étant configurée pour coulisser dans le plan de la plaque (23) par rapport au bras support (16) selon un jeu de coulissement lorsque l'élément de serrage (24) est desserré, de telle sorte que l'élément d'engagement (26) est apte à être désengagé de l'élément de blocage (20), lorsque l'élément de serrage (24) est desserré, par coulissement de la porte d'accès (15) par rapport au bras support (16).

2. - Dépoussiéreur (1) à cartouche(s) filtrante(s) selon la revendication 1, **caractérisé par le fait que** chaque bras support (16) comporte un trou (16a) disposé en face de l'élément de blocage (20) du support (13) de la cartouche filtrante (11) correspondante, une entretoise (28) reliée à l'élément de serrage (24) de la porte d'accès (15) correspondante étant disposée à l'intérieur dudit trou (16a), le jeu de coulissement de la porte d'accès (15) par rapport au bras support (16) étant créé par un espacement entre l'entretoise (28) et le bord du trou (16a).

3. - Dépoussiéreur (1) à cartouche(s) filtrante(s) selon la revendication 1 ou la revendication 2, **caractérisé par le fait que** deux doubles charnières reliées respectivement à deux bras supports (16) de deux portes d'accès (15) adjacentes ont leur charnière (17a) fixée sur l'enceinte (2) en commun pour former une triple charnière unique (17).

4. - Dépoussiéreur (1) à cartouche(s) filtrante(s) selon l'une des revendications 1 à 3, **caractérisé par le fait qu'**un joint d'étanchéité (23a) est disposé au niveau du bord et/ou de la périphérie de chaque plaque (23).

5. - Dépoussiéreur (1) à cartouche(s) filtrante(s) selon l'une des revendications 1 à 4, **caractérisé par le fait que** l'élément de serrage (24) est un dispositif de serrage à poussoir.

6. - Dépoussiéreur (1) à cartouche(s) filtrante(s) selon l'une des revendications 1 à 5, **caractérisé par le fait que** l'élément de blocage (20) est une rondelle ouverte en forme de C, l'ouverture de la rondelle étant tournée vers le haut, configurée pour coopérer avec un élément d'engagement (26) sous forme de vis dont la tige est apte à entrer dans la rondelle et dont la tête est apte à prendre appui sur la rondelle.

7. - Dépoussiéreur (1) à cartouche(s) filtrante(s) selon la revendication 6, **caractérisé par le fait qu'**un écrou de réglage (27) est disposé sur la vis pour ajuster la distance entre la tête de vis et la plaque (23) d'une porte d'accès (15).

8. - Dépoussiéreur (1) à cartouche(s) filtrante(s) selon l'une des revendications 1 à 7, **caractérisé par le fait que** chaque support (13) comporte trois tiges (13a) coudées équidistantes, les parties coudées des trois tiges (13a) étant reliées à l'élément de blocage (20) et les autres parties des trois tiges (13a) étant configurées pour s'encastrer dans des trous disposés dans la paroi de séparation (7) de l'enceinte (2).

9. - Dépoussiéreur (1) à cartouche(s) filtrante(s) selon l'une des revendications 1 à 8, **caractérisé par le fait que** chaque filtre (12) comprend plusieurs éléments de filtre (12a) successivement disposés sur le support (13) de la cartouche filtrante (11) correspondante, chaque liaison entre deux éléments de filtre (12a) étant étanche.

10. - Dépoussiéreur (1) à cartouche(s) filtrante(s) selon l'une des revendications 1 à 9, **caractérisé par le fait qu'**il comprend en outre une ou plusieurs buses de décolmatage (18) par air comprimé à contre-courant disposées dans la chambre d'air filtré (9) respectivement tournées vers la ou les ouvertures de flux d'air (10) dans la paroi de séparation (7).

11. - Dépoussiéreur (1) à cartouche(s) filtrante(s) selon la revendication 10, **caractérisé par le fait que** chaque support (13) de cartouche filtrante (11) comporte un ou plusieurs déflecteurs creux (22), chaque déflecteur creux (22) étant configuré pour dévier vers la paroi interne du filtre (12) une partie du flux d'air comprimé fourni par la buse (18) correspondante, l'autre partie du flux d'air comprimé passant à travers le déflecteur (22).

12. - Dépoussiéreur (1) à cartouche(s) filtrante(s) selon la revendication 11, **caractérisé par le fait que** chaque déflecteur (22) comporte sur tout ou partie de sa surface des perforations.

13. - Dépoussiéreur (1) à cartouche(s) filtrante(s) selon l'une des revendications 1 à 12, **caractérisé par le fait qu'**il comprend en outre un ventilateur pour créer un flux d'air entre l'entrée d'air (5) et la sortie d'air (6) de l'enceinte (2).

14. - Turbine équipée d'un dépoussiéreur (1) à cartouche(s) filtrante(s) selon l'une des revendications 1 à 13.
